Europäisches Patentamt

European Patent Office

Office européen des brevets

(11) Publication number: **0 369 998**
**A2**

# (12) EUROPEAN PATENT APPLICATION

(21) Application number: 90200183.3

(51) Int. Cl.⁵: **B29C 63/00, B29B 13/02, B29C 35/06**

(22) Date of filing: 09.04.87

(30) Priority: **11.04.86 GB 8608805**

(43) Date of publication of application:
**23.05.90 Bulletin 90/21**

(60) Publication number of the earlier application in accordance with Art.76 EPC: **0 241 297**

(84) Designated Contracting States:
**AT BE CH DE ES FR GB GR IT LI LU NL SE**

(71) Applicant: **Du Pont (UK) Limited**
**Hilcote Plant P.O. Box 1**
**Nr. Alfreton Derbyshire DE55 5JD(GB)**

(72) Inventor: **Hanover, Finn**
**2115 Meadow Lane**
**Wilmington, Delaware 19810(US)**

(74) Representative: **Jones, Alan John**
**CARPMAELS & RANSFORD 43 Bloomsbury Square**
**London, WC1A 2RA(GB)**

(54) **Radiant heater.**

(57) A radiant heater 37, 39, mounted on a sledge 35 and adapted to be pulled through the liner 12 to cause it to expand. The heater is sealed by travelling seals 50, 54 and air is circulated by a blower 43 and perforated pipe 46.

EP 0 369 998 A2

## Radiant Heater

This invention relates to a radiant heater for the internal heating of a tubular structure such as a pipe or liner.

This application is divided out of European Patent Application No. 87303125.6-2309 (Publication No. 0241297) and the contents of the Patent Application may be used as an illustration of the employment of the radiant heater of the present invention.

From one aspect this invention relates to a radiant heater for use in a method of lining a tubular structure or pipe with a liner, characterised by said heater being in the form of a rod or bar supported at one end on a carriage which is shaped to conform to the shape of the liner and to be slid along the liner.

From another aspect, the invention relates to an apparatus for internally heating a substantially cylindrical pipe, the apparatus having anterior and posterior ends and being characterised by:

(a) a platform;

(b) at least one radiant heating element mounted on the platform;

(c) a spiral air tube mounted on the platform to encircle the heating element at least once in a direction axial to the liner, the air tube having a plurality of apertures formed therein positioned to create a circumferential air flow within the pipe;

(d) electrical and pressurized air sources functionally connected to the radiant heating element and air tube, respectively;

(e) means for moving the platform through the pipe; and

(f) a diametric gasket positioned anterior to the heating element to separate the apparatus from the portion of the pipe anterior to the heating element.

Preferably there are at least two radiant heating elements positioned equidistant from the centre of the pipe . There may also be a diametric gasket positioned posterior to the heating element to seal the apparatus from the portion of pipe behind the heating element.

The air tube and heating element are preferably mounted on a common suspension.

In the accompanying drawings:-

Figure 1 illustrates in diagrammatic sectional form practice of the method of this invention in lining an underground pipe;

Figure 2 is an enlarged section on line 2-2;

Figure 3 is a scrap portion of Figure 1 modified to show a different method of applying axial pressure to the thermoplastic liner;

Figure 4 is a section through a pipe and liner showing a modified radiant heater; and

Figure 5 illustrates an alternative form of heater located within a liner.

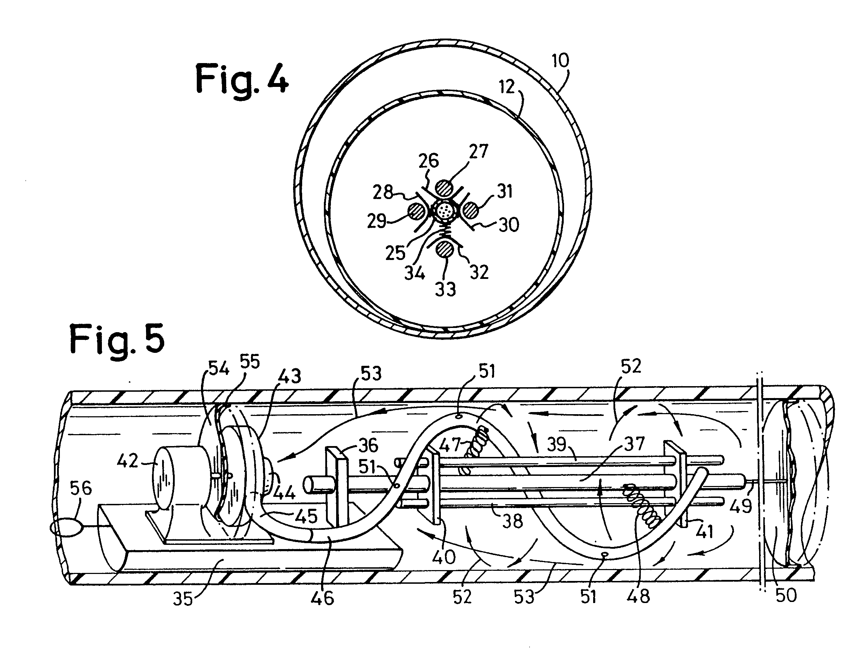

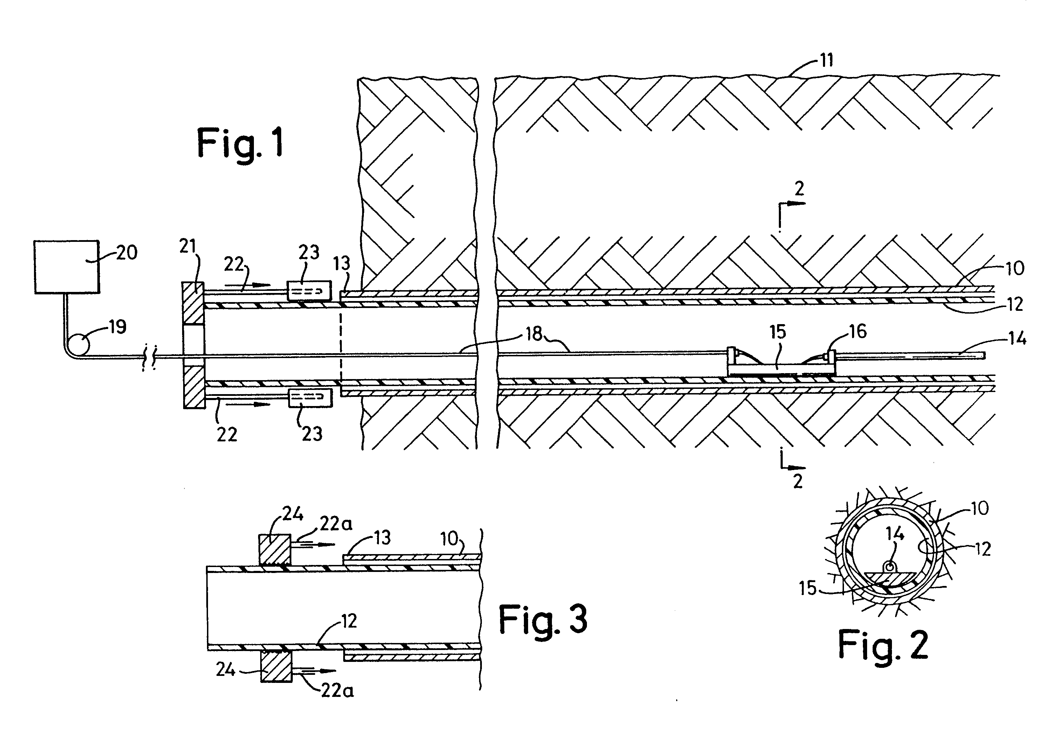

In Figure 1 is shown an iron gas main 10 which is located underground and may be several feet below ground level 11.

The gas main is to be lined with a polyethylene lining pipe or liner 12.

The length of polythene pipe 12 is chosen to be of larger external diameter than the internal diameter of the pipe 10. The polythene pipe is then heated and stretched so as to reduce its external diameter to say not more than 10% less than the internal diameter of the pipe 10.

One end 13 of the iron pipe is exposed by excavating a cavity in the ground, the cavity being sufficiently large to feedthrough a long length of polyethylene liner which may, for example, be about 10 to 12 metres in length.

The polythene liner is then inserted into the pipe leaving from 10 to 25% and preferably about 15% of the length of the pipe exposed so as to allow for axial shrinkage of the liner during the subsequent radial expansion within the pipe.

If the necessary radial expansion is 7% on the diameter the corresponding axial shrinkage will be $1.07^2 = 1.145$ or 14.5%.

A radiant heater 14 which is preferably in the form of an elongated tube of about 2m in length is then inserted into the liner on a carriage 15. The carriage 15 is shaped to conform to the shape of the liner so that it will slide freely along the liner and has a post 16 at one end on which the heater 14 is cantilevered.

At the other end is a second post 17 to which is attached a rope or cable 18 which may incorporate the wires carrying the power supply to the heater 14. Alternatively separate wires may be provided to the heater 14.

The rope or cable 18 passes around the pulley 19 and to a motor 20 which can provide a steady gentle pull on the rope 18 so as to pull the carriage or sledge 15 at a predetermined steady rate through the pipe. The motor 20 is preferably variable in speed so as to adjust the speed at which the carriage 15 moves through the pipe.

It has been found in practice that it is desirable to position the radiant heater 14 so that it is below the mid-level of the liner to ensure that the portion of the liner at the lowermost part of the pipe receives sufficient heat.

Since the liner is most likely resting on the bottom of the metal pipe this is where the more important heat sink is. For this reason this area should receive the highest heat intensity from the infra-red heater. Since the top of the liner is not initially in contact with the steel pipe - and therefore, has no heat sink - and at the same time is favoured as far as convective heat transfer is concerned this area should receive the lowest heat intensity from the radiant heater. This is achievable with the type of improved heating arrangement shown in Figure 4.

A central support tube 25 carries the electric wiring supplying four radiant rod heaters 27, 29, 31, 33 of the infra-red type, each being provided with a reflector 26, 28, 30, 32 respectively. The reflector 32 and heater rod 33 are located much further from the centre line of the pipe than the other heaters are.

The infra-red heaters preferably operate in the range 2 to 3 μ/i.e. in the medium range of infra-red spectrum.

An incentive for using infra-red heating is that polyethylene over a large range of wavelengths is somewhat transparent to infra-red radiation. This means that a significant proportion of the infra-red energy penetrates into the polyethylene liner wall directly causing it to heat up faster than if it was heated up by other means and which depend solely on conduction through the pipe wall.

The heater 14 is then pulled gently through the pipe and liner so as to cause the liner to expand and to return to its original diameter thus making an effective tight seal against the inner circumference of the pipe 10.

Because of drag and weight of the liner when such long lengths of liner are employed the expansion does not occur uniformly and fully. To overcome this problem an axial thrust or force may be applied to the liner 12, for example, by means of a block or bar 21 connected by rods 22 to jack devices 23 which may be set to provide a steady pull on the block 21 so as to overcome any drag or inertia of the liner as it proceeds into the pipe.

The jacks may be automatic devices which provide a constant pull or they may be operated manually and the force applied may be adjusted to suit particular lengths of liner and weights of liner and drag situations.

In Figure 3 an alternative method is shown of applying the axial force to the liner. A clamp 24 is used which again may be attached via rods 22a to suitable jacks similar to 23. By attaching the clamp 24 at a point fairly close to the entrance 13 of the pipe 10 a better control can be achieved on the axial force applied without distorting the liner.

A specific example of the application of this invention is given as follows:-

An iron gas pipe 10 which had lain in the ground for 50 years was to be lined with a polythene liner so as to extend the life of the original pipe. It was important to retain the volume flow through the pipe and so the liner was selected to cause the minimum reduction cross-sectional area of the original pipe and had to be brought into firm contact with internal surface of the pipe 10.

The pipe 10 was a 20 ft (6m) 8 inch nominal diameter cast iron main with an average inside diameter of 8.4 inches (21.4cm).

A polyethylene liner was selected with an outside diameter of 8.95 inches (22.7cm) and a wall thickness of 0.290 inches (0.75cm) produced from an ethylene octene-1 copolymer having a melt index of 1 and a density of 0.937 g/cc containing antioxidants and pigment.

The polyethylene liner was heated to a temperature of 113°C over a period of 1 hour and subsequently stretched 1.5X. After the liner had cooled to room temperature in this state the tension was released and the liner was permitted to relax. After three days, no further dimensional changes were noticeable and the outside diameter of the liner remained 7.65 inches (19.4cm).

A 25ft (7.72 m) long section of this liner was inserted into the 20 ft (6 m) long cast iron pipe in such a way that the liner and pipe were flush at one end with the longer length liner extending 5 ft out of the other pipe end 13.

A heater, of the design shown in Figure 5, using four 1 ft long, 3/8 inch diameter 1 Kw cartridge heaters was slid into the liner so that the heater elements extended just outside the far end, with the carriage section supported inside the liner.

After the current was turned on and the heater cartridges had reached their maximum temperature, the motor was started and the heater carriage progressively moved along the pipe from right to left as shown in Figure 1. As soon as the end of the heater was about 6 inches inside the liner, the end of the liner was plugged and the air source was turned on. At the same time, axial pressure of 100 pounds per square inch of liner wall thickness was applied by means of the mechanism shown in Figure 1. By moving the heater carriage at a rate of 4 to 5 inches/minute along the liner, the liner expanded to provide a good fit with the internal diameter of the cast iron pipe. The axial pressure ensured that full radial expansion took place. In the course of the radial expansion and axial contraction the portion of the liner extending outside of the pipe contracted into the pipe.

In Figure 5 is shown an alternative form of heater design adapted to cause the heat to circulate around the interior of the pipe so as to cause uniform heating of the whole pipe. As shown the heater is mounted on a carriage 35 in the form of a sledge which can be pulled through the pipe. The sledge preferably is in cross-section of substantially the same curved section as the pipe.

The sledge has a post 36 on which is mounted a support bar 37 for two infra-red heaters 38 and 39 supported from the bar 37 by means of supported brackets 40, 41. The heaters are preferably radiant heaters.

Mounted on the carriage 35 is an electric blower motor 42 driving a blower 43 having an intake 44 and an outlet 45. Connected to the outlet 45 of the blower is a spiral air manifold 46 which is coiled around the heater assembly as shown, and supported from the support bar 37 by springs 47 and 48.

Attached to the support bar 37 by a connector 49 is a trailing rubber gasket 50. Gasket 50 is in sealing contact with the internal surface of the pipe and assists in maintaining the heat within the section of liner being heat treated. The spiral manifold or air tube 46 has a number of orifices 51 throughout its length which are positioned to create a circumferential air flow within the pipe, in the direction shown by arrows 52,53. A second gasket 543 is mounted in a support 55 at the front end of the heater sledge and a ring 56 is provided at the front end for attaching a cable to pull the sledge through the pipe.

In operation as the carriage is moved slowly through the liner, the heater is operated and the blower is also operated so that hot air or other gas is caused to circulate and to distribute the heat uniformly around the interior of the liner. If the pipe which is being lined is in contact with the earth, at its lower side, then it is desirable to arrange the holes in the spiral pipe so that a greater amount of heat is conveyed to the lower part of the pipe, which is normally colder and a lesser amount to the upper part.

Use of the gaskets 50, 54 ensures that the heat applied to successive sections of the liner is constant and is not affected by the distance of the sledge from the end of the pipe.

Gasket 50 is preferably located some distance (e.g. 0.5 M) away from the heater to allow the pipe surface to set.

The gasket 54, being located between the motor 42 and the heater provides thermal protection for the motor.

## Claims

1. A radiant heater for use in a method of lining a tubular structure or pipe with a liner, characterised by said heater being in the form of a rod or bar (14; 27-33; 38, 39) supported at one end on a carriage (15; 35) which is shaped to conform to the shape of the liner and to be slid along the liner.

2. An apparatus for internally heating a substantially cylindrical pipe, the apparatus having anterior and posterior ends and being characterised by:

(a) a platform (35);

(b) at least one radiant heating element (38, 39) mounted on the platform;

(c) a spiral air tube (46) mounted on the platform (35) to encircle the heating element at least once in a direction axial to the liner, the air tube having a plurality of apertures (51) formed therein positioned to create a circumferential air flow within the pipe;

(d) electrical and pressurized air sources (43) functionally connected to the radiant heating element and air tube, respectively;

(e) means for moving the platform through the pipe; and

(f) a diametric gasket (50) positioned anterior to the heating element to separate the apparatus from the portion of the pipe anterior to the heating element.

3. The apparatus of claim 2 characterised by at least two radiant heating elements, positioned equidistant from the center of the pipe.

4. The apparatus of claim 2 or claim 3 further characterised by a diametric gasket (54) positioned posterior to the heating element(s), to seal the apparatus from the portion of the pipe behind the heating element.

5. An apparatus of any of claims 2 to 4 characterised in that the air tube and the heating element are mounted on a common suspension.

**Fig. 4**

10

12

26  27

28          31

29          30

25

34  33  32

**Fig. 5**

54  55  43      53          51              52

42          36

47  39  37

56                51

44          49

45  38  41

40

35      46      52  53  51  48      50

EP 0 369 998 A2

Fig. 1

Fig. 2

Fig. 3